# EUROPÄISCHE PATENTSCHRIFT

(11) **EP 2 614 563 B1**
(45) Veröffentlichungstag und Bekanntmachung des Hinweises auf die Patenterteilung: **12.11.2014**
(21) Anmeldenummer: 11761317.4
(22) Anmeldetag: 09.09.2011
(51) Int. Cl.: H02G 3/08

(54) **RAHMEN FÜR KABELDURCHFÜHRUNGSSYSTEME UND RAHMENTEILE HIERFÜR**
FRAME FOR CABLE PENETRATION SYSTEMS, AND FRAME PARTS THEREFOR
BÂTI POUR SYSTÈMES DE PASSE-CÂBLES ET PIÈCES POUR CE BÂTI

(30) Priorität: 10.09.2010 DE 102010037465
(43) Veröffentlichungstag der Anmeldung: 17.07.2013
(73) Patentinhaber: Phoenix Contact GmbH & Co. KG, 32825 Blomberg (DE)
(72) Erfinder: SPRENGER, Dennis, 32805 Horn-Bad Meinberg (DE); ANDRESEN, Jens, 32825 Blomberg (DE); RAß, Wolfgang, 33104 Paderborn (DE)
(74) Vertreter: Michalski Hüttermann & Partner Patentanwälte mbB
(86) Internationale Anmeldenummer: PCT/EP2011/065649
(87) Internationale Veröffentlichungsnummer: WO 2012/032156

(56) Entgegenhaltungen:
- WO-A1-2009/022960
- DE-A1- 4 434 202
- DE-A1- 19 959 185

## Beschreibung

Die Erfindung betrifft einen Rahmen für Kabeldurchführungssysteme und Rahmenteile hierfür.

Aus dem Stand der Technik sind zahlreiche Rahmen für Kabeldurchführungssysteme bekannt.

Diese Rahmen werden aus mehreren Teilkomponenten aufgebaut und weisen in der Regel Rastelemente oder Verschraubungen auf.

Bei den bekannten Teilkomponenten sind häufig unterschiedliche Teilkomponenten anzutreffen, so dass die Herstellung kostenintensiv und der Zusammenbau feherlanfällig ist.

Rastelemente erfordern, dass das Material relativ elastisch ist, so dass zum einen überhaupt ein Einführen möglich ist, zum anderen aber auch ein späteres Lösen wieder möglich wird.

Diese Elastizität führt aber auch dazu dass die Rahmen insgesamt eher elastisch sind und leicht verformbar sind.

Sind nun Kabel in dem Kabeldurchführungssystem eingebracht, so kann es häufig zu Verspannungen kommen, die ein Lösen der Rastung bewirken können.

Verschraubungen erfordern den Einsatz von Werkzeugen. Neben dem erhöhten Aufwand und einer zeitaufwändigen Montage hat sich in der Vergangenheit gezeigt, dass bei unsachgemäßem Zusammenbau der Rahmenteile mit falschem Werkzeug die Rahmenteil entweder nicht richtig fixiert oder aber beschädigt sind. Weiterhin kann ein Abrutschen von Werkzeugen bei der Montage auch ein Kabel beschädigen.

Aus der DE 199 59 185 A1 ist ein zweiteiliger Rahmen zur Durchführung von Kabeln bekannt, wobei die beiden Rahmenhälften mehrere Öffnungen bzw. Ausformungen zur Aufnahme von Zugentlastungen aufweisen. Die Rahmenhälften weisen jeweils einen Vorsprung auf, der in die entsprechende Ausnehmung der gegenüberliegenden Rahmenhälfte eingreift. Für eine feste Verbindung der beiden Rahmenhälften werden diese miteinander verschraubt.

Aus der WO 2009/022 960 A1 ist eine Kabeldurchführungseinrichtung für einen Schaltschrank bekannt. Die Kabeldurchführeinrichtung besteht aus zwei im Wesentlichen identischen Durchführungshälften. Die Durchführungshälften werden durch eine aufsteckbare Klemmvorrichtung zusammengehalten.

Aus der DE 44 34 202 A1 ist eine Kabeldurchführungsleiste mit zwei miteinander verbindbaren Leistenteilen bekannt. Hierzu weist ein Leistenteil Vorsprünge mit widerhaken und das andere Leistenteil entsprechenden Ausnehmungen auf. Weiterhin weisen die Leistenteile Ausnehmungen zur Durchführung von Kabeln auf.

Es ist daher Aufgabe der Erfindung einen Rahmen für Kabeldurchführungssysteme und Teile hierfür bereitzustellen, die einen oder mehrere Nachteile aus dem Stand der Technik in erfinderischer Weise löst.

Die Aufgabe wird gelöst durch einen Rahmen für Kabeldurchführungssysteme, welcher ein erstes Rahmenteil und ein gleichartiges zweites Rahmenteil aufweist.

Das Rahmenteil weist jeweils eine Aufnahme und einen Vorsprung auf.

Der Vorsprung des einen Rahmenteils ist geeignet zur Einführung in eine Aufnahme des anderen Rahmenteils ausgeführt.

Weiterhin weisen die Rahmenteile Verriegelungselemente auf, welche im zusammengebauten Zustand das erste Rahmenteil mit dem zweiten Rahmenteil lösbar verbinden, wobei die Verriegelungselemente Spannbügel bzw. wobei die Verriegelungselemente Schiebelemente aufweisen.

In einer Ausführungsform der Erfindung sind das erste Rahmenteil und das zweite Rahmenteil identisch ausgeführt.

In einer weiteren Ausführungsform der Erfindung ermöglichen die Rahmenteile beim Zusammenbau zu einem Rahmen eine Vorzentrierung.

In noch einer weiteren Ausführungsform der Erfindung ist der Rahmen aus einem Kunststoff oder Metall hergestellt.

Gemäß einer weiteren Ausführungsform der Erfindung weist der Rahmen Befestigungseinrichtungen für eine Montage an einem Gehäuse auf.

In einer Ausführungsform der Erfindung verriegeln die Verriegelungselemente die Vorsprünge in der jeweiligen Aufnahme.

In noch einer weiteren Ausführungsform der Erfindung verfügen die Rahmenteile zur Verriegelung über jeweils eigene Aufnahme und einen Vorsprung.

Die Aufgabe wird auch gelöst durch Rahmenteile eines Rahmens eines Kabeldurchführungssystems, wobei der Rahmen ein erstes Rahmenteil und ein zweites Rahmenteil aufweist. Dabei weist das erfindungsgemäße Rahmenteil eine Aufnahme und einen Vorsprung auf. Der Vorsprung des Rahmenteils ist geeignet zur Einführung in eine gleichartige Aufnahme eines zweiten Rahmenteils ausgeführt, und die Aufnahme des Rahmenteils ist geeignet zur Aufnahme eines gleichartigen Vorsprungs des zweiten Rahmenteils ausgeführt. Das Rahmenteil weist weiterhin ein Verriegelungselement auf, welches im zusammengebauten Zustand des Rahmens das Rahmenteil mit dem zweiten Rahmenteil lösbar verbindet, wobei die Verriegelungselemente Spannbügel bzw. wobei die Verriegelungselemente Schiebelemente aufweisen.

In einer Ausführungsform der Erfindung ermöglicht das Rahmenteil beim Zusammenbau des Rahmens eine Vorzentrierung.

In einer weiteren Ausführungsform der Erfindung ist das Rahmenteil aus einem Kunststoff oder Metall hergestellt.

In noch einer weiteren Ausführungsform der Erfindung weist das Rahmenteil Befestigungseinrichtungen für eine Montage an einem Gehäuse auf.

Gemäß noch einer weiteren Ausführungsform der Erfindung verriegelt das Verriegelungselement den Vorsprung des zweiten Rahmenteils in der Aufnahme.

In noch einer weiteren Ausführungsform der Erfindung verfügt das Rahmenteil zur Verriegelung mit dem zweiten Rahmenteil über eine gesonderte Aufnahme und einen gesonderten Vorsprung, welche die Rahmenteile im verrasteten Zustand unverlierbar halten.

Gemäß einer noch weiteren Ausführungsform der Erfindung verfügt das Rahmenteil weiterhin über Stege, wobei die Stege so ausgebildet sind, dass sie zur Aufnahme von Kabeldurchführungen aus unterschiedlichen Richtungen geeignet sind.

In noch einer weiteren Ausführungsform der Erfindung weist das Rahmenteil eine oder mehrere Verzahnungen auf.

Gemäß einer noch weiteren Ausführungsform der Erfindung verfügt das Rahmenteil weiterhin über mindestens eine Aufnahme für Aufnahme für Verriegelungselemente.

In noch einer weiteren Ausführungsform der Erfindung weist das Rahmenteil weiterhin mindestens ein Versteifungselement auf.

Nachfolgend wird die Erfindung näher unter Bezugnahme auf die Figuren erläutert.

In diesen zeigt:
- Figur 1: eine erste perspektivische schematische Darstellung von Rahmen und Rahmenteilen gemäß einer ersten Ausführungsform der Erfindung bei einem Zusammensetzen von Rahmenteilen,
- Figur 2: eine zweite perspektivische schematische Darstellung von Rahmen und Rahmenteilen gemäß einer ersten Ausführungsform der Erfindung beim Verriegeln von Rahmenteilen,
- Figur 3: eine dritte perspektivische schematische Darstellung von Rahmen und Rahmenteilen gemäß einer ersten Ausführungsform der Erfindung im verriegelten Zustand,
- Figur 4: eine weitere perspektivische schematische Darstellung eines Rahmenteils gemäß einer ersten Ausführungsform der Erfindung im verriegelten Zustand,
- Figur 5: eine perspektivische schematische Darstellung eines Rahmenteiles gemäß einer ersten Ausführungsform der Erfindung
- Figur 6: ein Detail aus Figur 5
- Figur 7: eine erste perspektivische schematische Darstellung von Rahmen und Rahmenteilen gemäß einer zweiten Ausführungsform der Erfindung bei einem Zusammensetzen von Rahmenteilen,
- Figur 8: eine zweite perspektivische schematische Darstellung von Rahmen und Rahmenteilen gemäß einer zweiten Ausführungsform der Erfindung beim Verriegeln von Rahmenteilen,
- Figur 9: eine weitere perspektivische schematische Darstellung eines Rahmenteils gemäß einer zweiten Ausführungsform der Erfindung beim Verriegeln von Rahmenteilen,
- Figuren 10 bis 12: schematische Darstellungen in Aufsicht von Rahmen und Rahmenteilen gemäß einer zweiten Ausführungsform der Erfindung beim Zusammenbau,
- Figur 13: eine weitere perspektivische schematische Darstellung eines Rahmenteils, welche ein weiteres Detail der Erfindung darstellt,
- Figur 14: eine weitere perspektivische schematische Darstellung eines Rahmenteils, welche ein weiteres Detail der Erfindung darstellt,
- Figur 15: eine weitere perspektivische schematische Darstellung eines Rahmenteils, welche ein weiteres Detail der Erfindung darstellt, und
- Figur 16: eine weitere perspektivische schematische Darstellung eines Rahmenteils, welche ein weiteres Detail der Erfindung darstellt.

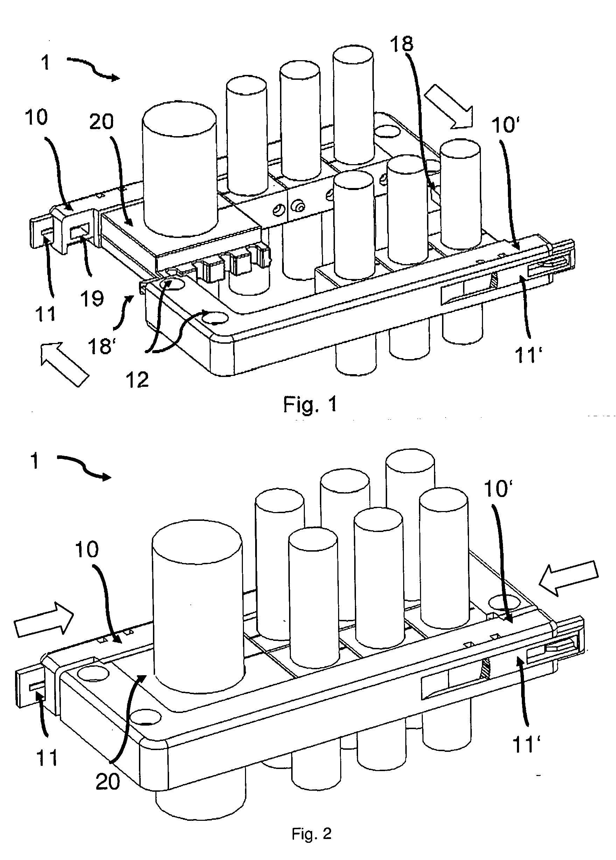

In Figur 1 ist eine erste perspektivische schematische Darstellung von Rahmen 1 und Rahmenteilen 10, 10' gemäß einer ersten Ausführungsform der Erfindung bei einem Zusammensetzen von Rahmenteilen gezeigt.

In dieser ersten Aüsführungsform weist der Rahmen 1 für Kabeldurchführungssysteme ein erstes Rahmenteil 10 und ein zweites Rahmenteil 10' auf.

Jedes Rahmenteil 10, 10' besitzt eine Aufnahme 19, 19' und einen Vorsprung 18, 18'.

Der Vorsprung 18 des ersten Rahmenteils 10 ist geeignet zur Einführung in die Aufnahme 19 des zweiten Rahmenteils 10 ausgeführt. In entsprechender Weise ist der Vorsprung 18' des zweiten Rahmenteils 10 'geeignet zur Einführung in die Aufnahme 19 des ersten Rahmenteils 10 ausgeführt.

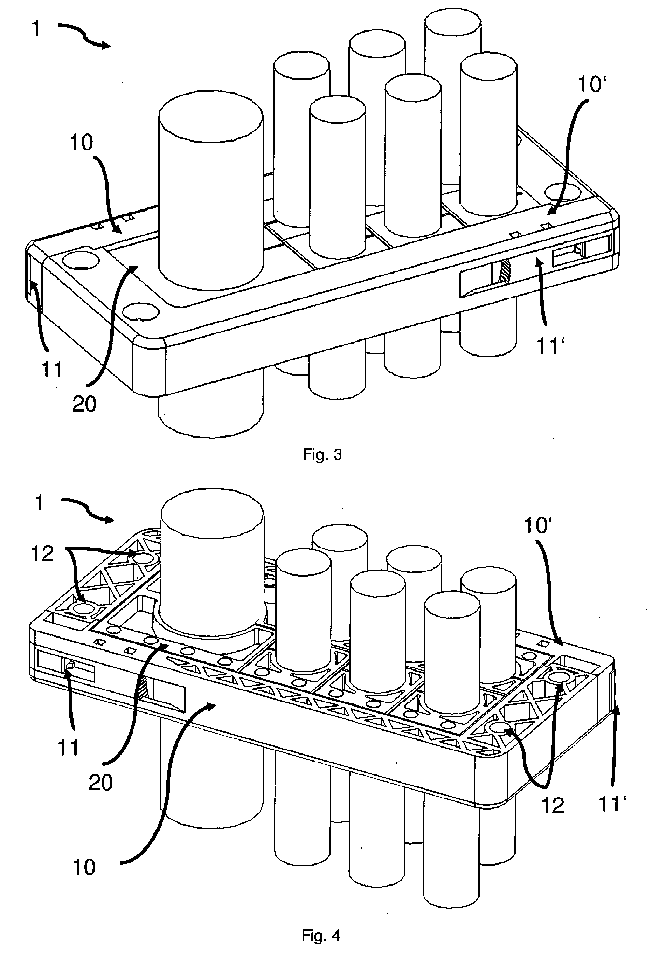

Das erste Rahmenteil 10 weist weiterhin ein Verriegelungselement 11 und das zweite Rahmenteil 10' ein Verriegelungselement 11' auf, wobei die Verriegelungselemente 11, 11' im zusammengebauten Zustand - wie in Figur 3 und 4 gezeigt - das erste Rahmenteil 10 mit dem zweiten Rahmenteil 10' lösbar verbinden können.

In dem Rahmen 1 werden Kabeldurchführung bzw. Kabeltülle 20 gehalten. Diese sind Gegenstand einer weiteren Anmeldung und werden hier unter Bezug auf die weitere Anmeldung einbezogen.

Beim Zusammenbau des Rahmens 1 aus den Rahmenteilen 10, 10' werden zunächst wechselseitig die Vorsprünge 18, 18' in die Aufnahmen 19, 19' geführt. Diese Anordnung von Vorsprüngen 18, 18' und Aufnahmen 19, 19' erlaubt eine Vorzentrierung, so dass die Rahmenteile - welche vorliegend identisch ausgeführt sein können - sicher miteinander verbindbar sind. Dieser Einführvorgang ist durch die seitlich in Figur 1 dargestellten Pfeile dargestellt.

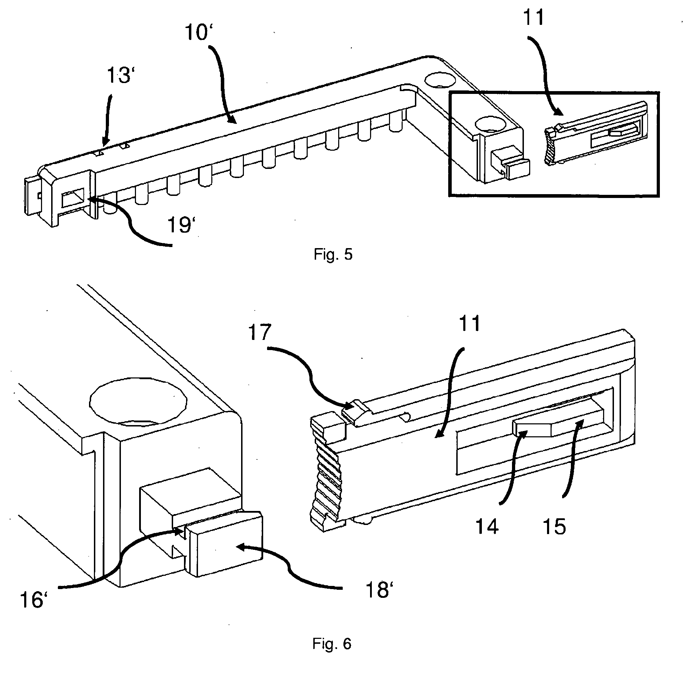

Anschließend werden wie in Figur 2 dargestellt die Verriegelungselemente 11,11' betätigt. Dieser Betätigungsprozess kann zu einer weiteren Zugbewegung führen, so dass die Rahmenteile zueinander gezogen werden. Durch das Einführen als auch das Zuziehen beim Verriegeln kann Spannung aufgebaut werden, so dass die Kabeltüllen 20 ebenfalls unter Druck gesetzt werden, so dass eine bessere Abdichtung erreicht werden kann. Dieser Vorgang des Zusammenziehens wird später unter Bezugnahme auf die Figuren 5 und 6 näher erläutert werden.

Nach Abschluss der Betätigung ist der Rahmen 1 aus den Rahmenteilen 10,10' aufgebaut und die Verbindung ist in umgekehrter Reihenfolge wieder lösbar. Ein solcher fertig gestellter Rahmen ist in Figur 3 und Figur 4 dargestellt. Hierbei ist Figur 3 eine Ansicht auf eine Oberseite während Figur 4 die Ansicht einer Unterseite ist. Wie man unschwer in Figur 4 erkennen kann, können die Rahmenteile auch weitere Ausnehmungen aufweisen, die so gestaltet sind, dass die Festigkeit und Dichtigkeit des Rahmens gewährleistet ist und gleichzeitig Material gespart wird.

Durch die erfindungsgemäße Ausgestaltung wird erreicht, dass eine zuverlässige Verbindung von Rahmenteilen möglich ist. Die Verbindung selbst ist lösbar. Weiterhin wird für die Herstellung der Verbindung kein Werkzeug gebraucht, so dass die Montagefreundlichkeit und Demontagefreundlichkeit gegenüber Stand der Technik Lösungen stark verbessert ist. Weiterhin können die Rahmenteile 10 und 10' identisch ausgeführt sein, so dass kostengünstig nur ein Herstellungsprozess nötig ist.

In Figur 5 ist eine perspektivische schematische Darstellung eines Rahmenteiles 10' gemäß einer ersten Ausführungsform der Erfindung gezeigt, wobei Figur 6 ein Detail hiervon zeigt.

Das Rahmenteil 10' weist einen Vorsprung 18' auf. Dieser wird beim Zusammenbau in eine Aufnahme 19 eines anderen (nicht dargestellten) Rahmenteils 10 eingeführt. Dieses Rahmenteil 10 verfügt über ein Verriegelungselement 11. Das Verriegelungselement 11 verfügt über eine oder mehrere Anschlagflächen 14 welche schräg ausgestaltet sind. Weiterhin verfügt das Verriegelungselement 11 über eine oder mehrere Halteflächen 15. Der Vorsprung 18' wiederum weist eine oder mehrere Ausnehmungen 16' auf, welche so gestaltet sind, dass sie mit den schrägen Anschlagflächen 14 und Halteflächen 15 zusammenwirken. Hierbei wird in einem ersten Schritt beim Verschließen der Vorsprung 18 schienenartig durch die Ausnehmung 16 und die schräge Anschlagflächen 14 eingefädelt und anschließend durch die schräge Anschlagfläche 14 beim weiteren Verschließen zusammengezogen. Die Haltefläche 15 verhindert dann durch Haftreibung ein Abgleiten der nun verriegelten Rahmenteile 10, 10'.

Weiterhin können an den Rahmenteilen 10, 10' auch noch ein oder mehrere Federarme 17 vorgesehen sein. Diese können in geeignete Aufnahmen 13' einfedern. Dabei kann eine Endlage des Verriegelungselemente 11, 11' definiert werden.

Die Verriegelungselemente 11, 11' sind in dieser ersten Ausführungsform als Schiebelemente ausgeführt.

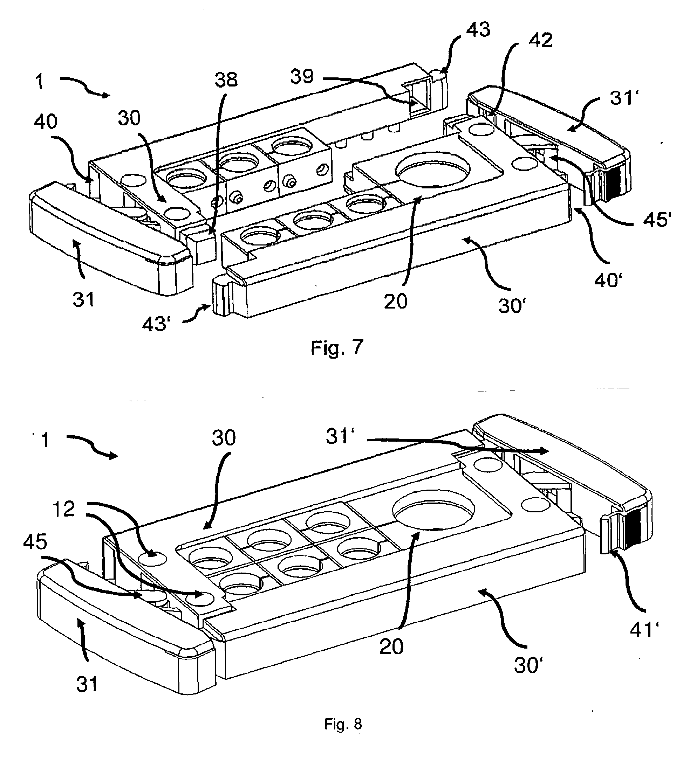

In Figur 7 ist eine erste perspektivische schematische Darstellung von Rahmen und Rahmenteilen gemäß einer zweiten Ausführungsform der Erfindung bei einem Zusammensetzen von Rahmenteilen gezeigt.

In Figur 1 ist eine erste perspektivische schematische Darstellung von Rahmen 1 und Rahmenteilen 10, 10' gemäß einer ersten Ausführungsform der Erfindung bei einem Zusammensetzen von Rahmenteilen gezeigt.

In dieser zweiten Ausführungsform weist der Rahmen 1 für Kabeldurchführungssysteme ein erstes Rahmenteil 30 und ein zweites Rahmenteil 30' auf.

Jedes Rahmenteil 30, 30' besitzt eine Aufnahme 39,39' und einen Vorsprung 38, 38'.

Der Vorsprung 38 des ersten Rahmenteils 30 ist geeignet zur Einführung in die Aufnahme 39 des zweiten Rahmenteils 30 ausgeführt. In entsprechender Weise ist der Vorsprung 38' des zweiten Rahmenteils 30 'geeignet zur Einführung in die Aufnahme 39 des ersten Rahmenteils 30 ausgeführt.

Das erste Rahmenteil 30 weist weiterhin ein Verriegelungselement 31 und das zweite Rahmenteil 30' ein Verriegelungselement 31' auf, wobei die

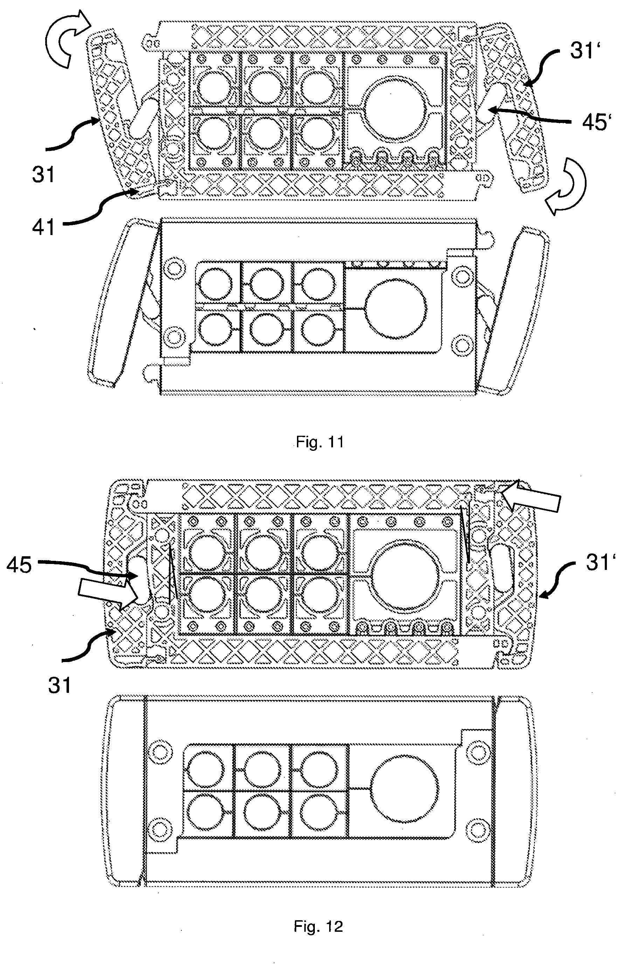

Verriegelungselemente 31, 31' im zusammengebauten Zustand - wie in Figur 12 gezeigt - das erste Rahmenteil 30 mit dem zweiten Rahmenteil 30' lösbar verbinden können.

Im Rahmen 1 werden Kabeldurchführung bzw. Kabeltülle 20 gehalten. Diese sind Gegenstand einer weiteren Anmeldung und werden hier unter Bezug auf die weitere Anmeldung einbezogen.

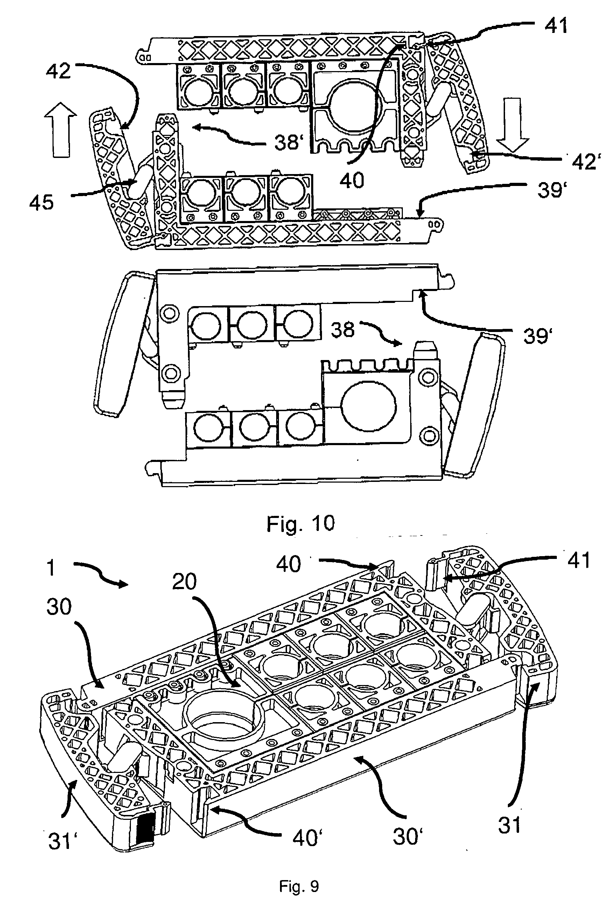

Beim Zusammenbau des Rahmens 1 aus den Rahmenteilen 30, 30' werden zunächst wechselseitig die Vorsprünge 38, 38' in die Aufnahmen 39, 39' geführt. Diese Anordnung von Vorsprüngen 38, 38' und Aufnahmen 39, 39' erlaubt eine Vorzentrierung, so dass die Rahmenteile - welche vorliegend identisch ausgeführt sein können - sicher miteinander verbindbar sind. Dieser Einführvorgang ist durch die seitlich in Figur 10 dargestellten Pfeile dargestellt.

Anschließend werden wie in Figur 11 dargestellt die Verriegelungselemente 31, 31' betätigt. Dieser Betätigungsprozess kann zu einer weiteren Zugbewegung führen, so dass die Rahmenteile zueinander gezogen werden. Durch das Einführen als auch das Zuziehen beim Verriegeln kann Spannung aufgebaut werden, so dass die Kabeltüllen 20 ebenfalls unter Druck gesetzt werden, so dass eine bessere Abdichtung erreicht werden kann.

Nach Abschluss der Betätigung ist der Rahmen 1 aus den Rahmenteilen 30, 30' aufgebaut und die Verbindung ist in umgekehrter Reihenfolge wieder lösbar. Ein solcher fertig gestellter Rahmen 1 ist in Figur 12 dargestellt. Hierbei ist Figur 12 unten eine Ansicht auf eine Oberseite während Figur 12 oben die Ansicht einer Unterseite ist. Wie man unschwer in Figur 4 erkennen kann, können die Rahmenteile auch weitere Ausnehmungen aufweisen, die so gestaltet sind, dass die Festigkeit und Dichtigkeit des Rahmens gewährleistet ist und gleichzeitig Material gespart wird.

Durch die erfindungsgemäße Ausgestaltung wird erreicht, dass eine zuverlässige Verbindung von Rahmenteilen möglich ist. Die Verbindung selbst ist lösbar. Weiterhin wird für die Herstellung der Verbindung kein Werkzeug gebraucht, so dass die Montagefreundlichkeit und Demontagefreundlichkeit gegenüber dem Stand der Technik stark verbessert ist.

Weiterhin können die Rahmenteile 30 und 30' identisch ausgeführt sein, so dass kostengünstig nur ein Herstellungsprozess nötig ist.

In der in zweiten Ausführungsform sind die Verriegelungselemente 31, 31' als Spannbügel ausgeführt. Sobald die Rahmenteile 30, 30' ineinander geführt sind, kann - wie in Fig. 11 durch Pfeile gezeigt - der Spannbügel verschwenkt werden.

Bei der Verschwenkung wird dabei das Verriegelungselement 31, 31' durch das Gelenk 45, 45' und durch den Vorsprung 40, 40', der in der Aufnahme 41, 41' zunächst beweglich aufgenommen wird, geführt.

Bei der Verschwenkung wird Druck aufgebaut, so dass das jeweils andere Rahmenteil 30, 30' herangezogen wird. In Figur 11 ist im Gegensatz zu Figur 12 deutlich zu erkennen, dass die Rotationsachse beim Verschwenken in der Aufnahme 40, 40' wandert.

Es versteht sich von selbst, dass auch ein Verschwenken des Verriegelungselemente 31, 31' um den Vorsprung 42 in der Aufnahme 43' zum selben Ergebnis führt. In dieser Form der Verschwenkung wird das Verriegelungselement 31, 31' durch das Gelenk 45, 45' und durch den Vorsprung 42, 42', der in der Aufnahme 43, 43' zunächst beweglich aufgenommen wird, geführt.

Hierbei dient der Vorsprung 40 und die Aufnahme 41 dazu den Spannbügel 31 in 2 Positionen (Fig. 11/Fig. 12) zu sichern, während die Führung im Wesentlichen durch das Gelenk 45, den Vorsprung 42 und die Aufnahme 43 vorgegeben ist.

Bei dieser Ausgestaltung des Verriegelungselementes 31,31' als Spanbügel kann beispielsweise ein Totpunkt vor Erreichung der Endlage (Fig. 12) vorgesehen sein. Im Totpunkt wird die maximale Kraft auf das aus Spannbügel und restlichem Rahmenteil gebildeten Scharnier ausgeübt. Wird der Totpunkt Richtung Endlage überschritten sinkt die Kraft wider. Hierdurch wird ein zuverlässige lösbare Verspannung gewährleitet, denn zum Lösen ist wieder Kraft nötig, so dass der Totpunkt erneut (nun in anderer Richtung) überwunden wird.

Dieser Bereich verrastet den über das Gelenk 45 am Rahmenteil 30 gelagerten Spannbügel 31 mit dem anderen Rahmenteil 30'.

Die Verbindung der Rahmenteile 30, 30' wird durch das Spannen der Spannbügel 31, 31' erreicht und löst sich durch die Überschreitung des Totpunktes nicht selbstständig. Die Verrastung 40, 41 dient hier dazu, dass die Verbindung nur durch die Betätigung des Rasthakens 40,41 zu öffnen ist. Hierdurch werden die Rahmenteile unverlierbar gehalten.

Weiterhin kann vorgesehen sein, dass die Vorsprünge 41, 41' und / oder die Vorsprünge 43, 43' mit den jeweiligen Aufnahmen 40, 40' und/oder 42, 42' Rastfunktionen bereitstellen, die eine zusätzliche Sicherung ermöglichen. In der dargestellten zweiten Ausführungsform verfügen die Rahmenteile 30,30' zur Verriegelung über jeweils eine eigene Aufnahme 41, 41' und einen Vorsprung 40, 40'. Der Rahmen 1 bzw. die Rahmenteile 10, 10'; 30, 30' der unterschiedlichen Ausführungsformen können aus einem Kunststoff oder Metall hergestellt sein.

Weiterhin können an den Rahmenteilen 10, 10'; 30, 30' bzw. an dem Rahmen 1 der unterschiedlichen Ausführungsformen eine oder mehrere Befestigungseinrichtungen 12 für eine Montage an einem Gehäuse vorgesehen sein. Diese können als Verschraubung, Löcher für Verschraubung oder Klemmdübel und dergleichen ausgeführt sein.

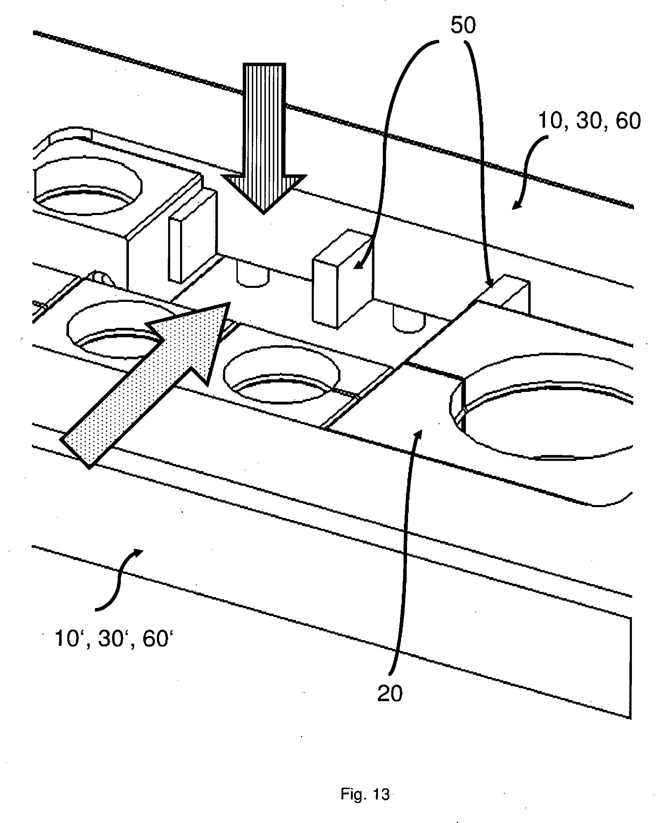

Gemäß einem weiteren Detail - dargestellt in Figur 13 - können ein oder mehrere Stege 50 an den Rahmenteilen 10, 10'; 30, 30'; 60, 60' vorgesehen sein.

Diese Stege 50 sind so ausgebildet, dass sie zur Aufnahme von Kabeldurchführungen 20 ausgebildet sind. Dabei können Kabeldurchführungen 20 aus unterschiedlichen Richtungen aufgenommen werden.

Zwei dieser Richtungen sind zum besseren Verständnis durch Pfeile in der Figur 13 hervorgehoben.

Ein erster Pfeil mit Linienfüllung zeigt eine normale Richtung in Bezug auf einen fertig montierten Rahmen an, ein weiterer Pfeil mit Punktfüllung zeigt eine kollineare Richtung in Bezug auf einen fertig montierten Rahmen an.

Es versteht sich von selbst, dass diese durch die Pfeile angedeuteten Richtungen lediglich beispielhaft gezeigt sind und weitere Richtungen ohne weiteres möglich sind.

Diese Stege 50 ermöglichen einen verbesserten Halt von aufgenommenen Kabeldurchführungen 20 und stabilisieren die Kabeldurchführungen 20 zusätzlich bereits in der Montagephase beziehungsweise auch während einer Demontage.

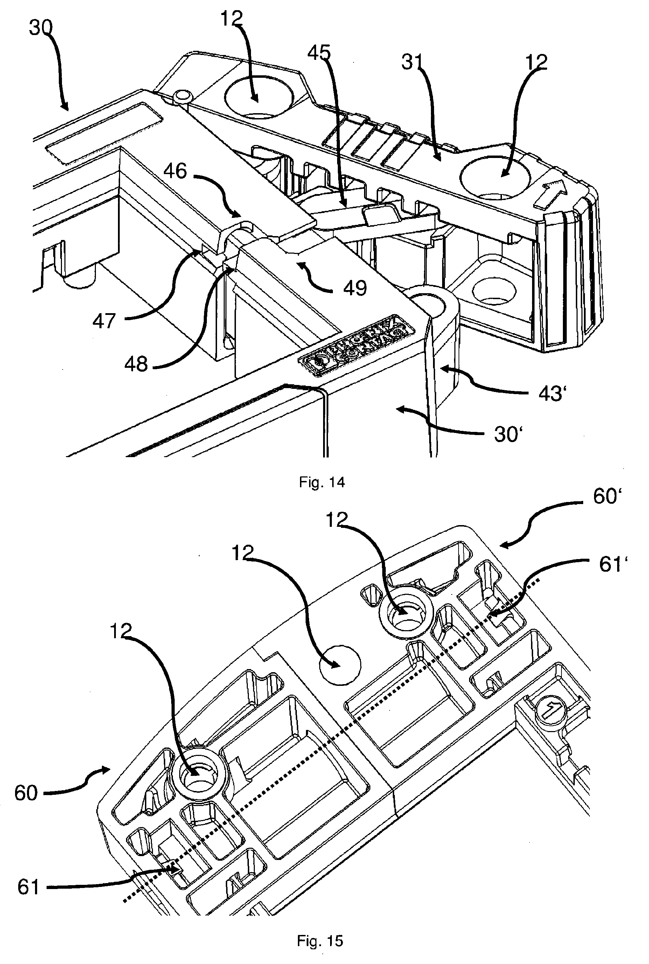

Gemäß einem weiteren Detail, welches in Figur 14 dargestellt ist, kann vorgesehen sein, dass an den Rahmenteilen 10, 10'; 30, 30'; 60, 60' eine oder mehrere Verzahnungen 46, 47, 48, 49 vorgesehen sind. Diese Verzahnungen können wie dargestellt an unterschiedlichen Flächen der Rahmenteile 10, 10'; 30, 30'; 60, 60' angeordnet sein. Es kann ohne weiteres noch weitere Verzahnungen oder auch weniger Verzahnungen vorgesehen sein. Durch die gegenseitige Abstützung der Verzahnung 46 auf 49 bzw. 47 auf 48 wird insbesondere bei geringen Materialstärken für die Rahmenteile 10, 10'; 30, 30'; 60, 60' eine höhere Verwindungssteifigkeit bereitgestellt. Somit kann der Materialeinsatz minimiert werden und somit wird eine kostengünstige Herstellungsweise ermöglicht. Gemäß einem weiteren Detail, welches in Verbindung mit Figur 15 erläutert ist, können die Rahmenteile 10, 10'; 30, 30'; 60, 60' zusätzlich oder alternativ auch über Aufnahmen für Verriegelungselemente 61, 61' verfügen. Diese Aufnahmen können wie in Figur 15 dargestellt so gestaltet sein, dass sowohl eine Mutter aufgenommen werden kann als auch eine Schraube eingeführt werden kann. Die sich ergebende Schraubenachse ist als punktierte Linie angegeben. Bei der dargestellten Auslegung kann am Einsatzort flexibel entschieden werden, ob von der einen oder von der anderen Seite geschraubt werden kann. Dies ist insbesondere bei engen räumlichen Verhältnissen von Vorteil, da nun die Montage entsprechend dem zur Verfügung stehenden Arbeitsraum angepasst werden kann.

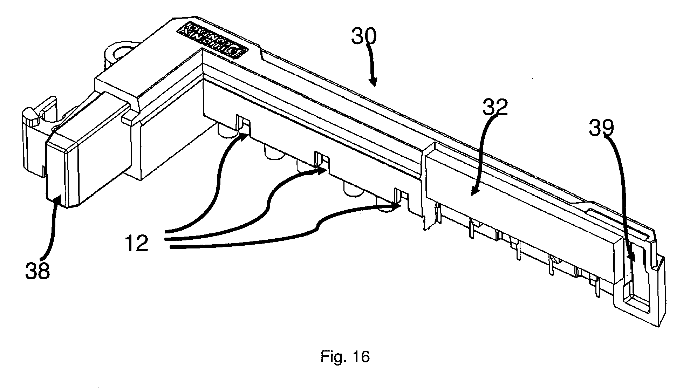

Gemäß einem weiteren Detail, welches in Figur 16 dargestellt ist, kann vorgesehen sein, dass die Rahmenteile 10, 10'; 30, 30'; 60, 60' zumindest abschnittsweise ein Versteifungselement 32 aufweisen. Dieses Versteifungselement 32 kann z.B. aus einem metallischen Werkstoff gefertigt sein In einer vorteilhaften Herstellungsweise wird das Versteifungselement 32 bereits beim Herstellen der Rahmenteile 10, 10'; 30, 30'; 60, 60' eingebracht. Besonders vorteilhaft lässt sich dies beim Spritzgießen realisieren. Dabei wird das Versteifungselement 32 erwärmt und beim Spritzgießen der Rahmenteile 10, 10'; 30, 30'; 60, 60' teilweise umschlossen. Durch die Verwendung von einem oder mehreren Versteifungselementen 32 wird insbesondere bei geringen Materialstärken für die Rahmenteile 10, 10'; 30, 30'; 60, 60' eine höhere Verwindungssteifigkeit bereitgestellt. Somit kann der Materialeinsatz minimiert werden und somit wird eine kostengünstige Herstellungsweise ermöglicht.

Weiterhin können die Rahmenteile 10, 10'; 30, 30'; 60, 60' - wie in Figur 14 und 15 angedeutet - auch symmetrisch aufgebaut sein. Desweiteren können wie in Figur 14 ersichtlich die Rahmenteile 10, 10'; 30, 30'; 60, 60' auch ein U-förmiges Profil aufweisen.

### Bezugszeichenliste

- Rahmen: 1
- Rahmenteil: 10, 10', 30, 30', 60, 60'
- Verriegelungselemente: 11, 11', 31, 31'
- Aufnahme für Verriegelungselemente: 61, 61'
- Befestigungseinrichtungen: 12
- Aufnahme: 13'
- Anschlagfläche: 14
- Haltevorsprung: 15
- Ausnehmung: 16'
- Federarm: 17
- Vorsprung: 18, 18', 38, 38'
- Aufnahme: 19, 19' ,39, 39'
- Kabeldurchführung: 20
- Versteifungselement: 32
- Vorsprung: 40, 40', 42, 42'
- Aufnahme: 41, 41', 43, 43'
- Gelenk: 45, 45'
- Verzahnung: 46, 47, 48, 49
- Steg: 50

## Patentansprüche

1. Rahmen (1) für Kabeldurchführungssysteme, aufweisend
ein erstes Rahmenteil (10, 30, 60) und ein zweites Rahmenteil (10', 30', 60'), wobei
jedes Rahmenteil (10, 10', 30, 30'; 60, 60') eine Aufnahme (19, 19', 39, 39') und einen Vorsprung (18, 18', 38, 38') aufweist, wobei
der Vorsprung (18, 38) des ersten Rahmenteils (10, 30, 60) geeignet zur Einführung in die Aufnahme (19', 39') des zweiten Rahmenteils (10', 30', 60') ausgeführt ist, wobei
der Vorsprung (18', 38') des zweiten Rahmenteils (10', 30', 60') geeignet zur Einführung in die Aufnahme (19, 39) des ersten Rahmenteils (10, 30, 60) ausgeführt ist,
**dadurch gekennzeichnet, dass**
das erste Rahmenteil (10, 30, 60) weiterhin ein Verriegelungselement (11, 31) und das zweite Rahmenteil (10', 30', 60') weiterhin ein Verriegelungselement (11', 31') aufweist, wobei
die Verriegelungselemente (11, 11', 31, 31') im zusammengebauten Zustand das erste Rahmenteil (10, 30, 60) mit dem zweiten Rahmenteil (10', 30', 60') lösbar verbinden können, wobei die Verriegelungselemente (11, 11') Schiebelemente aufweisen.

2. Rahmen (1) für Kabeldurchführungssysteme, aufweisend
ein erstes Rahmenteil (10, 30, 60) und ein zweites Rahmenteil (10', 30', 60'), wobei
jedes Rahmenteil (10, 10', 30, 30'; 60, 60') eine Aufnahme (19, 19', 39, 39') und einen Vorsprung (18, 18', 38, 38') aufweist, wobei
der Vorsprung (18, 38) des ersten Rahmenteils (10, 30, 60) geeignet zur Einführung in die Aufnahme (19', 39') des zweiten Rahmenteils (10', 30', 60') ausgeführt ist, wobei
der Vorsprung (18', 38') des zweiten Rahmenteils (10', 30', 60') geeignet zur Einführung in die Aufnahme (19, 39) des ersten Rahmenteils (10, 30, 60) ausgeführt ist,
**dadurch gekennzeichnet, dass**
das erste Rahmenteil (10, 30, 60) weiterhin ein Verriegelungselement (11, 31) und das zweite Rahmenteil (10', 30', 60') weiterhin ein Verriegelungselement (11', 31') aufweist, wobei
die Verriegelungselemente (11, 11', 31, 31') im zusammengebauten Zustand das erste Rahmenteil (10, 30, 60) mit dem zweiten Rahmenteil (10', 30', 60') lösbar verbinden können, wobei die Verriegelungselemente (31, 31') Spannbügel aufweisen.

3. Rahmen (1) gemäß Anspruch 1 oder 2, **dadurch gekennzeichnet, dass** das erste Rahmenteil und das zweite Rahmenteil identisch ausgeführt sind.

4. Rahmen (1) nach einem der vorhergehenden Ansprüche, **dadurch gekennzeichnet, dass** die Rahmen beim Zusammenbau eine Vorzentrierung ermöglichen.

5. Rahmen (1) nach einem der vorhergehenden Ansprüche 1. oder 3 bis 4, **dadurch gekennzeichnet, dass** die Verriegelungselemente (11, 11') die Vorsprünge (18, 18', 38, 38') in der jeweiligen Aufnahme verriegeln.

6. Rahmen (1) nach einem der vorhergehenden Ansprüche 2 bis 4, **dadurch gekennzeichnet, dass** die Rahmenteile (30, 30') zur Verriegelung über jeweils eine Aufnahme (41, 41') und einen Vorsprung (40, 40') verfügen.

7. Rahmenteil (10, 10', 30, 30'; 60, 60') für einen Rahmen (1) eines Kabeldurchführungssystems, wobei der Rahmen im zusammengebauten Zustand ein erstes Rahmenteil (10, 30) und ein gleichartiges zweites Rahmenteil (10', 30') aufweist, wobei
das Rahmenteil (10, 10', 30, 30'; 60, 60') eine Aufnahme (19, 19', 39, 39') und einen Vorsprung (18, 18', 38, 38') aufweist, wobei
der Vorsprung (18, 18', 38, 38') des Rahmenteils geeignet zur Einführung in eine Aufnahme (19, 19', 39, 39') eines zweiten Rahmenteils ausgeführt ist, wobei
die Aufnahme (19, 19', 39, 39') des Rahmenteils geeignet zur Aufnahme eines Vorsprungs (18, 18', 38, 38') des zweiten Rahmenteils ausgeführt ist,
**dadurch gekennzeichnet, dass**
das Rahmenteil (10, 10', 30, 30'; 60, 60') weiterhin ein Verriegelungselement (11, 11', 31, 31') aufweist, wobei die Verriegelungselemente (11, 11', 31, 31') im zusammengebauten Zustand das erste Rahmenteil (10, 30, 60) mit dem zweiten Rahmenteil (10', 30', 60') lösbar verbinden können, wobei das Verriegelungselement (11, 11') ein Schiebelement aufweist.

8. Rahmenteil (10, 10', 30, 30'; 60, 60') für einen Rahmen (1) eines Kabeldurchführungssystems, wobei der Rahmen im zusammengebauten Zustand ein erstes Rahmenteil (10, 30) und ein gleichartiges zweites Rahmenteil (10', 30') aufweist, wobei
das Rahmenteil (10, 10', 30, 30'; 60, 60') eine Aufnahme (19, 19', 39, 39') und einen Vorsprung (18, 18', 38, 38') aufweist, wobei
der Vorsprung (18, 18', 38, 38') des Rahmenteils geeignet zur Einführung in eine Aufnahme (19, 19', 39, 39') eines zweiten Rahmenteils ausgeführt ist, wobei
die Aufnahme (19, 19', 39, 39') des Rahmenteils geeignet zur Aufnahme eines Vorsprungs (18, 18', 38, 38') des zweiten Rahmenteils ausgeführt ist,
**dadurch gekennzeichnet, dass**
das Rahmenteil (10, 10', 30, 30'; 60, 60') weiterhin ein verriegelungselement (11, 11', 31, 31') aufweist, wobei die Verriegelungselemente (11, 11', 31, 31') im zusammengebauten Zustand das erste Rahmenteil (10, 30, 60) mit dem zweiten Rahmenteil (10', 30', 60') lösbar verbinden können, wobei das Verriegelungselement (11, 11') ein Schiebelement aufweist, wobei das verriegelungselement (31, 31') einen Spannbügel aufweist.

9. Rahmenteil (10, 10', 30, 30'; 60, 60') gemäß Anspruch 7 oder 8, **dadurch gekennzeichnet, dass** das Rahmenteil beim Zusammenbau des Rahmens eine Vorzentrierung ermöglichen.

10. Rahmenteil (10, 10', 30, 30'; 60, 60') nach einem der vorhergehenden Ansprüche 7 oder 9, **dadurch gekennzeichnet, dass** das Verriegelungselement (11, 11') den Vorsprung (18, 18') des zweiten Rahmenteils in der Aufnahme verriegelt.

11. Rahmenteil (10, 10', 30, 30'; 60, 60') nach einem der vorhergehenden Ansprüche 8 bis 9, **dadurch gekennzeichnet, dass** das Rahmenteil zur Verriegelung mit dem zweiten Rahmenteil über eine gesonderte Aufnahme (40, 40') und einen gesonderten Vorsprung (41, 41') verfügt, welche die Rahmenteile im verrasteten Zustand unverlierbar halten.

12. Rahmenteil (10, 10', 30, 30'; 60, 60') nach einem der vorhergehenden Ansprüche 7 bis 11, **dadurch gekennzeichnet, dass** das Rahmenteil weiterhin über Stege (50) verfügt, wobei die Stege (50) so ausgebildet sind, dass sie zur Aufnahme von Kabeldurchführungen 20 aus unterschiedlichen Richtungen geeignet sind.

13. Rahmenteil (10, 10', 30, 30'; 60, 60') nach einem der vorhergehenden Ansprüche 7 bis 12, **dadurch gekennzeichnet, dass** das Rahmenteil eine oder mehrere Verzahnungen (46, 47, 48, 49) aufweist.

14. Rahmenteil (10, 10', 30, 30'; 60, 60') nach einem der vorhergehenden Ansprüche 7 bis 13, **dadurch gekennzeichnet, dass** das Rahmenteil weiterhin über mindestens eine Aufnahme für Aufnahme für Verriegelungselemente (61, 61') aufweist.

15. Rahmenteil (10, 10', 30, 30'; 60, 60') nach einem der vorhergehenden Ansprüche 7 bis 14, **dadurch gekennzeichnet, dass** das Rahmenteil weiterhin mindestens ein Versteifungselement (32) aufweist.

## Claims

1. A frame (1) for cable feedthrough systems, comprising a first frame part (10, 30, 60) and a second frame part (10', 30', 60'), wherein
each frame part (10, 10', 30, 30'; 60, 60') has a recess (19, 19', 39, 39') and a projection (18, 18', 38, 38), wherein the projection (18, 38) of the first frame part (10, 30, 60) is suitably embodied for insertion into the recess (19', 39') of the second frame part (10', 30', 60'), wherein
the projection (18', 38') of the second frame part (10', 30', 60') is suitably embodied for insertion into the recess (19, 39) of the first frame part (10, 30, 60),
**characterised in that**
the first frame part (10, 30, 60) further has a locking element (11, 31) and the second frame part (10', 30', 60') further has a locking element (11', 31'), wherein
the locking elements (11, 11', 31, 31') in the assembled state may detachably connect the first frame part (10, 30, 60) with the second frame part (10', 30', 60'), wherein the locking elements (11, 11') have sliding elements.

2. A frame (1) for cable feedthrough systems, comprising a first frame part (10, 30, 60) and a second frame part (10', 30', 60'), wherein
each frame part (10, 10', 30, 30'; 60, 60') has a recess (19, 19', 39, 39') and a projection (18, 18', 38, 38'), wherein
the projection (18, 38) of the first frame part (10, 30, 60) is suitably embodied for insertion into the recess (19', 39') of the second frame part (10', 30', 60'), wherein
the projection (18', 38') of the second frame part (10', 30', 60') is suitably embodied for insertion into the recess (19, 39) of the first frame part (10, 30, 60),
**characterised in that**□the first frame part (10, 30, 60) further has a locking element (11, 31) and the second frame part (10', 30', 60') further has a locking element (11', 31'), wherein the locking elements (11, 11', 31, 31') in the assembled state may detachably connect the first frame part (10, 30, 60) with the second frame part (10', 30', 60'), wherein
the locking elements (11, 11', 31, 31') in the assembled state may detachably connect the first frame part (10, 30, 60) with the second frame part (10', 30', 60'), wherein the locking elements (31, 31') have latch fasteners.

3. The frame (1) according to Claim 1 or 2, **characterised in that** the first frame part and the second frame part are identical.

4. The frame (1) according to one of the preceding claims, **characterised in that** the frames enable a pre-centring during the assembly.

5. The frame (1) according to one of preceding Claims 1 or 3 to 4, **characterised in that** the locking elements (11, 11') lock the projections (18, 18', 38, 38') in the respective recess.

6. The frame (1) according to one of preceding Claims 2 to 4, **characterised in that** the frame parts (30, 30') each have a recess (41, 41') and a projection (40, 40') for locking.

7. A frame part (10, 10', 30, 30'; 60, 60') for a frame (1) of a cable feedthrough system, wherein the frame in the assembled state has a first frame part (10, 30) and an equally shaped second frame part (10', 30'), wherein
the frame part (10, 10', 30, 30'; 60, 60') has a recess (19, 19', 39, 39') and a projection (18, 18', 38, 38'), wherein
the projection (18, 18', 38, 38') of the frame part is suitably embodied for insertion into a recess (19, 19', 39, 39') of a second frame part, wherein
the recess (19, 19', 39, 39') of the frame part is suitably embodied for receiving a projection (18, 18', 38, 38') of the second frame part,
**characterised in that** the frame part (10, 10', 30, 30'; 60, 60') further has a locking element (11, 11', 31, 31'), wherein the locking elements (11, 11', 31, 31') in the assembled state may detachably connect the first frame part (10, 30, 60) with the second frame part (10', 30', 60'), wherein the locking element (11, 11') has a sliding element.

8. A frame part (10, 10', 30, 30'; 60, 60') for a frame (1) of a cable feedthrough system, wherein the frame in the assembled state has a first frame part (10, 30) and an equally shaped second frame part (10', 30'), wherein
the frame part (10, 10', 30, 30'; 60, 60') has a recess (19, 19', 39, 39') and a projection (18, 18', 38, 38'), wherein
the projection (18, 18', 38, 38') of the frame part is suitably embodied for insertion into a recess (19, 19', 39, 39') of a second frame part, wherein
the recess (19, 19', 39, 39') of the frame part is suitably embodied for receiving a projection (18, 18', 38, 38') of the second frame part,
**characterised in that**
the frame part (10, 10', 30, 30'; 60, 60') further has a locking element (11, 11', 31, 31'), wherein the locking elements (11, 11', 31, 31') in the assembled state may detachably connect the first frame part (10, 30, 60) with the
second frame part (10', 30', 60'), wherein the locking element (11, 11') has a sliding element, wherein the locking element (31, 31') has a latch fastener.

9. The frame part (10, 10', 30, 30'; 60, 60') according to Claim 7 or 8, **characterised in that** the frame part enables a pro-centring during the assembly of the frame.

10. The frame part (10, 10', 30, 30'; 60, 60') according to one of preceding Claims 7 or 9, **characterised in that** the locking element (11, 11') locks the projection (18, 18') of the second frame part in the recess.

11. The frame part (10, 10', 30, 30'; 60, 60') according to one of preceding claims 8 to 9, **characterised in that** the frame part has a separate recess (40, 40') and a separate projection (41, 41') for locking the same with the second frame part, said recess and projection holding the frame parts undetachably in the locked state.

12. The frame part (10, 10', 30, 30'; 60, 60') according to one of preceding Claims 7 to 11, **characterised in that** the frame part further has bars (50), wherein the bars (50) are embodied such that they are suitable for receiving cable feedthroughs (20) from different directions.

13. The frame part (10, 10', 30, 30'; 60, 60') according to one of preceding Claims 7 to 12, **characterised in that** the frame part has one or more toothings (46, 47, 48, 49).

14. The frame part (10, 10', 30, 30'; 60, 60') according to one of the preceding Claims 7 to 13, **characterised in that** the frame part further has at least one recess for receiving locking elements (61, 61').

15. The frame part (10, 10', 30, 30'; 60, 60') according to one of the preceding Claims 7 to 14, **characterised in that** the frame part further has at least one stiffening element (32).

## Revendications

1. Cadre (1) pour des systèmes de passage de câbles, comportant
une première pièce de cadre (10, 30, 60) et une deuxième pièce de cadre (10', 30', 60'), dans lequel
chaque pièce de cadre (10, 10', 30, 30' ; 60, 60') comporte une admission (19, 19', 39, 39') et une saillie (18, 18', 38, 38'), dans lequel
la saillie (18, 38) de la première pièce de cadre (10, 30, 60) est conçue adaptée pour être insérée dans l'admission (19', 39') de la deuxième pièce de cadre (10', 30', 60'), dans lequel
la saillie (18', 38') de la deuxième pièce de cadre (10', 30', 60') est conçue adaptée pour être insérée dans l'admission (19, 39) de la première pièce de cadre (10, 30, 60),
**caractérisé en ce que**
la première pièce de cadre (10, 30, 60) comporte en outre un élément de verrouillage (11, 31) et la deuxième pièce de cadre (10', 30', 60') comporte en outre un élément de verrouillage (11', 31'), dans lequel
dans l'état assemblé, les éléments de verrouillage (11, 11', 31, 31') peuvent relier de façon détachable la première pièce de cadre (10, 30, 60) avec la deuxième pièce de cadre (10', 30', 60'), les éléments de verrouillage (11, 11') comportant des éléments coulissants.

2. Cadre (1) pour des systèmes de passage de câbles, comportant
une première pièce de cadre (10, 30, 60) et une deuxième pièce de cadre (10', 30', 60'), dans lequel
chaque pièce de cadre (10, 10', 30, 30' ; 60, 60') comporte une admission (19, 19', 39, 39') et une saillie (18, 18', 38, 38'), dans lequel
la saillie (18, 38) de la première pièce de cadre (10, 30, 60) est conçue adaptée pour être insérée dans l'admission (19', 39') de la deuxième pièce de cadre (10', 30', 60'), dans lequel
la saillie (18', 38') de la deuxième pièce de cadre (10', 30', 60') est conçue adaptée pour être insérée dans l'admission (19, 39) de la première pièce de cadre (10, 30, 60),
**caractérisé en ce que**
la première pièce de cadre (10, 30, 60) comporte en outre un élément de verrouillage (11, 31) et la deuxième pièce de cadre (10', 30', 60') comporte en outre un élément de verrouillage (11', 31'), dans lequel
dans l'état assemblé, les éléments de verrouillage (11, 11', 31, 31') peuvent relier de façon détachable la première pièce de cadre (10, 30, 60) avec la deuxième pièce de cadre (10', 30', 60'), les éléments de verrouillage (31, 31') comportant des étriers de serrage.

3. Cadre (1) selon la revendication 1 ou 2, **caractérisé en ce que** la première pièce de cadre et la deuxième pièce de cadre sont conçues identiques.

4. Cadre (1) selon l'une des revendications précédentes, **caractérisé en ce que** lors de l'assemblage, les cadres permettent un précentrage.

5. Cadres (1) selon l'une des revendications précédentes 1 ou 3 à 4, **caractérisé en ce que** les éléments de verrouillage (11, 11') verrouillent les saillies (18, 18', 38, 38') dans l'admission respective.

6. Cadre (1) selon l'une des revendications précédentes 2 à 4, **caractérisé en ce que** les pièces de cadre (30, 30') disposent respectivement d'une admission (41, 41') et d'une saillie (40, 40') pour le verrouillage.

7. Pièce de cadre (10, 10', 30, 30'; 60, 60') pour un cadre (1) d'un système de passage de câbles, dans laquelle, dans l'état assemblé, le cadre comporte une première pièce de cadre (10, 30) et une deuxième pièce de cadre (10', 30') du même genre, dans laquelle
la pièce de cadre (10, 10', 30, 30'; 60, 60') comporte une admission (19, 19', 39, 39') et une saillie (18, 18', 38, 38'), dans laquelle
la saillie (18, 18', 38, 38') de la pièce de cadre est conçue adaptée pour être insérée dans une admission (19, 19', 39, 39') d'une deuxième pièce de cadre, dans laquelle
l'admission (19, 19', 39, 39') de la pièce de cadre est conçue adaptée pour recevoir une saillie (18, 18', 38, 38') de la deuxième pièce de cadre,
**caractérisée en ce que**
la pièce de cadre (10, 10', 30, 30'; 60, 60') comporte en outre un élément de verrouillage (11, 11', 31, 31'), les éléments de verrouillage (11, 11', 31, 31') pouvant relier de façon détachable la première pièce de cadre (10, 30, 60) avec la deuxième pièce de cadre (10', 30', 60') dans l'état assemblé, l'élément de verrouillage (11, 11') comportant un élément coulissant.

8. Pièce de cadre (10, 10', 30, 30'; 60, 60') pour un cadre (1) d'un système de passage de câbles, dans laquelle, dans l'état assemblé, le cadre comporte une première pièce de cadre (10, 30) et une deuxième pièce de cadre (10', 30') du même genre, dans laquelle
la pièce de cadre (10, 10', 30, 30' ; 60, 60') comporte une admission (19, 19', 39, 39') et une saillie (18, 18', 38, 38'), dans laquelle
la saillie (18, 18', 38, 38') de la pièce de cadre est conçue adaptée pour être insérée dans une admission (19, 19', 39, 39') d'une deuxième pièce de cadre, dans laquelle
l'admission (19, 19', 39, 39') de la pièce de cadre est conçue adaptée pour recevoir une saillie (18, 18', 38, 38') de la deuxième pièce de cadre,
**caractérisée en ce que**
la pièce de cadre (10, 10', 30, 30' ; 60, 60') comporte en outre un élément de verrouillage (11, 11', 31, 31'), les éléments de verrouillage (11, 11', 31, 31') pouvant relier de façon détachable la première pièce de cadre (10, 30, 60) avec la deuxième pièce de cadre (10', 30', 60') dans l'état assemblé, l'élément de verrouillage (11, 11') comportant un élément coulissant, l'élément de verrouillage (31, 31') comportant un étrier de serrage.

9. Pièce de cadre (10, 10', 30, 30'; 60, 60') selon la revendication 7 ou 8, **caractérisée en ce que** la pièce de cadre permet un précentrage lors de l'assemblage du cadre.

10. Pièce de cadre (10, 10', 30, 30'; 60, 60') selon l'une des revendications précédentes 7 ou 9, **caractérisée en ce que** l'élément de verrouillage (11, 11') verrouille la saillie (18, 18') de la deuxième pièce de cadre dans l'admission.

11. Pièce de cadre (10, 10', 30, 30' ; 60, 60') selon l'une des revendications précédentes 8 à 9, **caractérisée en ce que** la pièce de cadre dispose d'une admission (40, 40') particulière et d'une saillie (41, 41') particulière pour le verrouillage avec la deuxième pièce de cadre, lesquelles maintiennent les pièces de cadre de façon imperdable dans l'état encliqueté.

12. Pièce de cadre (10, 10', 30, 30'; 60, 60') selon l'une des revendications précédentes 7 à 11, **caractérisée en ce que** la pièce de cadre dispose en outre d'entretoises (50), les entretoises (50) étant conçues de manière à être adaptées pour recevoir des passages de câbles 20 venant de directions différentes.

13. Pièce de cadre (10, 10', 30, 30' ; 60, 60') selon l'une des revendications précédentes 7 à 12, **caractérisée en ce que** la pièce de cadre comporte une ou plusieurs dentures (46, 47, 48, 49).

14. Pièce de cadre (10, 10', 30, 30' ; 60, 60') selon l'une des revendications précédentes 7 à 13, **caractérisée en ce que** la pièce de cadre dispose en outre d'au moins une admission pour l'admission d'éléments de verrouillage (61, 61').

15. Pièce de cadre (10, 10', 30, 30' ; 60, 60') selon l'une des revendications précédentes 7 à 14, **caractérisée en ce que** la pièce de cadre comporte en outre au moins un élément rigidifiant (32) .
